(19) **Europäisches Patentamt**

**European Patent Office**

**Office européen des brevets**

(11) **EP 0 767 388 B1**

(12) **FASCICULE DE BREVET EUROPEEN**

(45) Date de publication et mention
de la délivrance du brevet:
**02.01.2002 Bulletin 2002/01**

(51) Int Cl.⁷: **G01S 1/04**

(21) Numéro de dépôt: **96402097.8**

(22) Date de dépôt: **01.10.1996**

(54) **Récepteur large bande à mesure de distance par signaux de code pseudo-aléatoire**

Breitbandempfänger zur Messung des Abstandes mittels Pseudozufallssignalen

Wideband receiver for measuring range using pseudo random signals

(84) Etats contractants désignés:
**DE ES GB**

(30) Priorité: **06.10.1995 FR 9511795**

(43) Date de publication de la demande:
**09.04.1997 Bulletin 1997/15**

(73) Titulaire: **THALES AVIONICS S.A.**
**78141 Vélizy Villacoublay Cédex (FR)**

(72) Inventeurs:
• **Guillard, Patrice**
**92402 Courbevoie Cedex (FR)**

• **Renard, Alain**
**92402 Courbevoie Cedex (FR)**

(74) Mandataire: **Albert, Claude et al**
**Thomson-CSF Propriété Intellectuelle, 13,**
**Avenue du Président Salvador Allende**
**94117 Arcueil Cédex (FR)**

(56) Documents cités:
**EP-A- 0 552 975**       **DE-A- 3 806 394**
**GB-A- 2 189 969**

# Description

La présente invention se rapporte à un récepteur de radiolocalisation pour la mesure de distance par code pseudo-aléatoire.

Des systèmes passifs de positionnement et de navigation tels que le système "Global Positioning system " (GPS) ou son équivalent russe "Global Navigation system" (GLONASS) permettent à un utilisateur de déterminer précisément ses latitude, longitude et altitude ainsi que l'heure à partir de signaux émis par une constellation de satellites. Ces systèmes sont bien connus et sont basés sur la transmission par les satellites de codes pseudo-aléatoires, le récepteur d'un utilisateur ayant à traiter un signal HF composite provenant de ceux de ces satellites en vue directe.

Chaque satellite transmet des informations à bas débit comprenant des données de navigation telles que l'éphéméride du satellite, le temps courant et des informations d'état, en utilisant un système de codage biphase. Le système GPS utilise un accès multiple par répartition de code et le système GLONASS un accès multiple par répartition en de fréquence.

Dans les deux cas, un récepteur traite le signal d'un satellite en corrélant le signal composite reçu avec le code pseudo-aléatoire généré localement. La position dans le temps de ce code fournit un moyen de mesurer le temps de transmission du signal depuis le satellite, et par suite de déterminer la position et la vitesse en trois dimensions et le temps précis à partir d'au moins quatre satellites.

On mesure habituellement la position temporelle du code pseudo-aléatoire à l'aide d'une boucle de verrouillage de retard (DLL pour "delay lock loop" dans la littérature anglo-saxonne) réalisant la corrélation d code local avancé, ponctuel et retardé avec le signal composite. Les signaux de corrélation, après filtrage et traitement, servent à contrôler la synchronisation du générateur local de code pseudo-aléatoire. En conservant le verrouillage de la boucle, on peut poursuivre le satellite et démoduler les données de navigation superposées au code pseudo-aléatoire.

Cependant, de tels systèmes doivent mesurer le temps de la propagation en vue directe et ils sont donc soumis à des distorsions d'origine ionosphérique (retards) ou dues aux trajets multiples par exemple.

Une solution connue, par exemple de la demande de brevet EP-A-0 552 975, consiste à utiliser des corrélateurs avancé-retardé dont l'espacement classique de un moment du code est, après acquisition, réduit à une fraction de moment, ce qui réduit de manière notable l'erreur de poursuite due aux trajets multiples.

Cependant cette solution n'est pas totalement satisfaisante car il reste des erreurs résiduelles notables gênantes pour les applications ayant besoin de précision (approche, atterrissage etc...).

Un objet de l'invention est donc un récepteur perfectionné qui permet d'atteindre avec les codes C/A des performances équivalentes à celle d'un récepteur classique à code P, ceci grâce à l'utilisation d'un nouveau type de corrélation quadruple.

Selon l'invention, il est donc prévu un récepteur à large bande pour la mesure de distance par signaux modulés par des codes pseudo-aléatoires, ledit récepteur démodulant et décodant un signal HF composite incluant plusieurs signaux transmis modulés par des codes pseudo-aléatoires, tel que défini dans les revendications.

L'invention sera mieux comprise et d'autres caractéristiques et avantages apparaîtront à l'aide de la description ci-après et des dessins joints où :

- la figure 1 est un schéma synoptique général de récepteur à code pseudo-aléatoire ;
- la figure 2 est un schéma de la partie traitement du signal à n canaux ;
- la figure 3 est un schéma des moyens de corrélation du récepteur selon l'invention ;
- la figure 4 représente un diagramme temporel de signaux des moyens de corrélation ; et
- la figure 5 représente des courbes d'enveloppe d'erreur de position en fonction du retard multitrajet pour divers espacements de corrélateurs connus et pour le corrélateur selon l'invention.

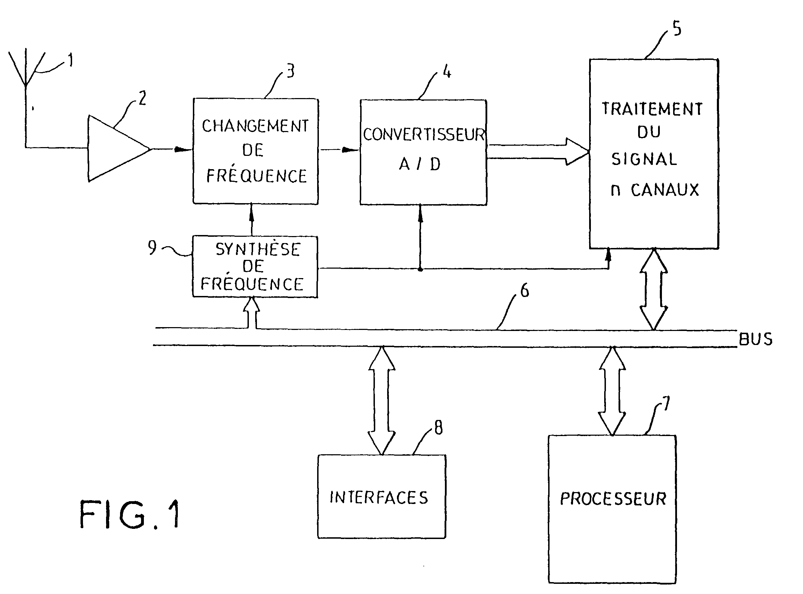

La figure 1 représente le schéma synoptique général d'un récepteur à code pseudo-aléatoire. Il comprend une antenne 1, un ensemble filtrage amplificateur à faible bruit 2, un ensemble de changement de fréquence 3 recevant un (ou plusieurs) signal d'oscillateur local OL, un échantillonneur/convertisseur analogique-numérique 4, un dispositif de traitement du signal à n canaux 5, un bus 6, un processeur 7, des interfaces 8 et un bloc de synthèse de fréquences 9.

L'antenne 1 reçoit un signal HF composite comprenant les signaux transmis par tous les satellites en vue directe. Le signal composite est envoyé à un ensemble de changement de fréquence 3 qui fournit un signal à fréquence intermédiaire à l'échantillonneur/convertisseur analogique-numérique 4 ainsi qu'un signal d'horloge d'échantillonnage permettant de déterminer les instants auxquels doivent être pris les échantillons. Ces échantillons sont envoyés sur un bus de signal au dispositif de traitement du signal 5. Ce dispositif associé au processeur 7 comprend n canaux dont chacun est prévu pour traiter les signaux d'un satellite particulier qui est en vue du récepteur. Chaque canal peut donc traiter les signaux en phase et en quadrature d'un satellite et permet la poursuite de la porteuse et du code assignés à ce satellite. Comme on le verra ultérieurement, chaque canal utilise un circuit de synchronisation de porteuse et de code pour se verrouiller en phase et en fréquence sur le signal de porteuse modulé par le code pseudo-aléatoire en maintenant un décalage Doppler spécifique au satellite considéré. Chaque canal maintient donc un verrouillage avec un code pseudo-aléatoire généré localement en prévoyant deux corrélateurs utilisés dans une boucle de verrouillage de retard. Le dispositif 5 avec le processeur 7 réalise aussi la démodulation des données.

Cette description de la figure 1 correspond à une architecture classique de récepteur GPS.

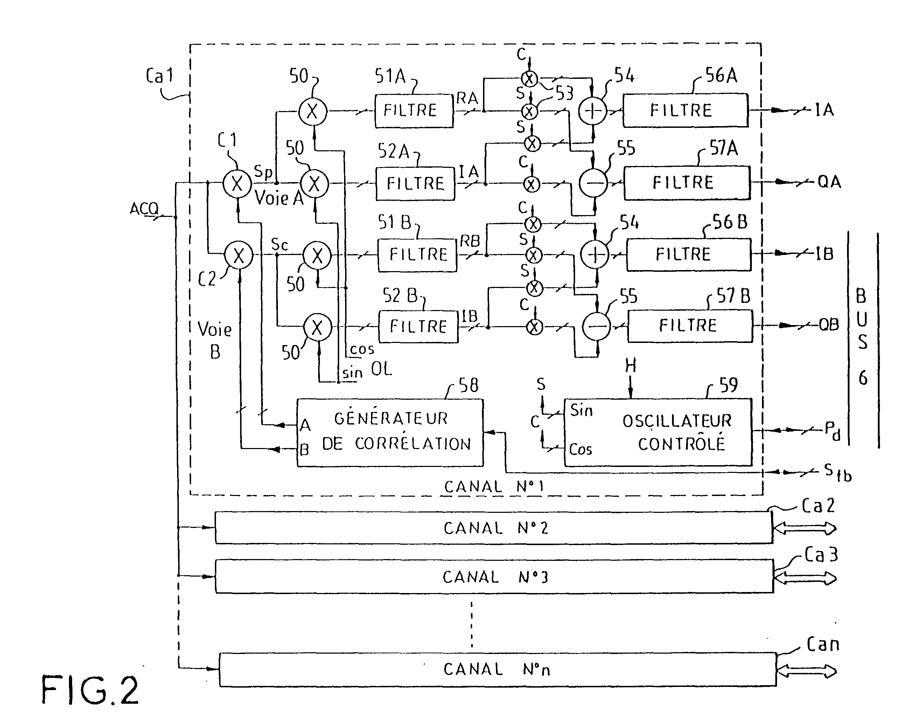

La figure 2 est un schéma plus détaillé du dispositif de traitement de signal 5. Le dispositif reçoit les échantillons ACQ du signal composite. Il comprend n canaux identiques Ca1 à Can assignés chacun à un satellite particulier alors en vue. Seul le canal Ca1 est représenté plus en détail.

Il comporte deux corrélateurs C1 et C2 et un dispositif générateur de corrélation 58 contrôlé par un signal $S_{fb}$. Les signaux de corrélation obtenus Sp et Sc sont transposés en bande de base à partir d'un signal d'oscillateur local OL et des multiplieurs 50 pour chacune des composantes en phase et en quadrature. Ces signaux en bande de base sont filtrés par les filtres 51A, 52A, 51B, 52B respectivement des voies A et B. Après élimination de la composante Doppler à l'aide d'un oscillateur à commande numérique 59, commandé par le signal de phase Doppler $P_d$ venant du processeur 7 par le bus 6, et de multiplieurs 53 recevant les sorties sinus S et cosinus C de l'oscillateur 59, on procède à un filtrage à bande étroite, par exemple 1 KHz, à l'aide des filtres 56A, 57A, 56B, 57B qui délivrent respectivement les composantes en phase I et en quadrature Q des voies A et B (IA, QA, 1B, QB). Ces composantes sont traitées par le processeur pour fournir un signal de contrôle pour les oscillateurs à commande numérique (NCO) de porteuse et de code.

Comme on l'a déjà expliqué plus haut, dans les systèmes connus, le générateur de corrélation fournit, pendant la phase d'acquisition, des codes avancé-retardé aux deux corrélateurs, espacés typiquement d'un moment du code. Après acquisition, le générateur de corrélation fournit des codes ponctuel/avancé moins retardé aux deux corrélateurs avec un espacement réduit à une fraction de moment.

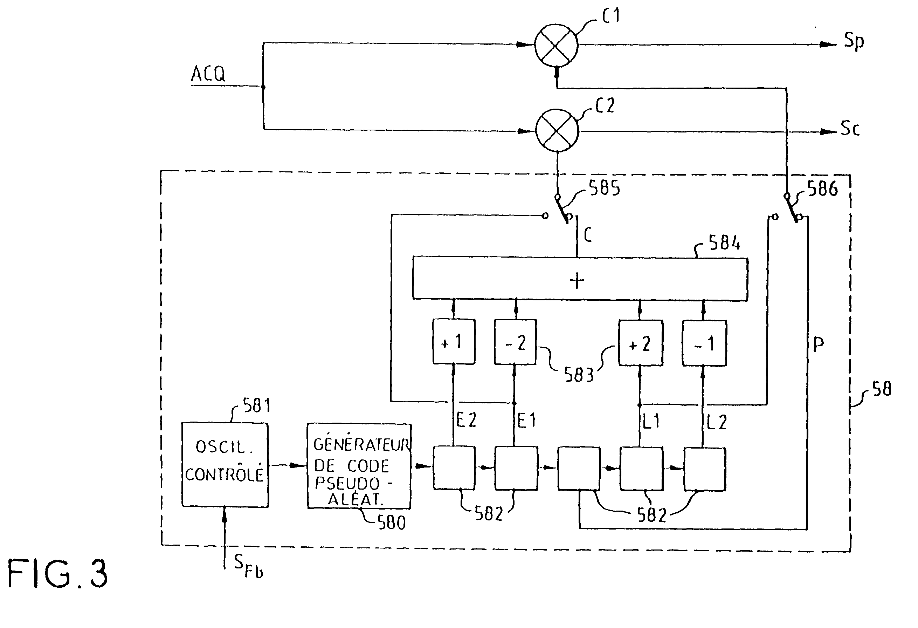

Selon l'invention on utilise un générateur de corrélation 58 modifié qui est représenté schématiquement sur la figure 3. Ce générateur comporte d'abord un oscillateur à commande numérique 581 contrôlé par le signal de réaction $S_{fb}$ et qui pilote un générateur de code pseudo-aléatoire 580. Les codes produits par ce générateur sont envoyés à une ligne à retard numérique à cinq prises régulièrement espacées et comportant des éléments de retard identiques ajustables 582. Les sorties de la ligne à retard fournissent respectivement les signaux avancés E2, E1, ponctuel P et retardés L1, L2. On combine ces signaux après pondération par les circuits 583 par un additionneur 584 pour former une combinaison arithmétique C selon la relation :

$$C = E2 - 2E1 + 2L1 - L2 \qquad (1)$$

Cette combinaison peut être envoyée au corrélateur C2 par l'intermédiaire d'un commutateur 585 recevant d'autre part le code avancé E1. De même le corrélateur C1 peut recevoir par un commutateur 586 soit le signal ponctuel P soit le signal retardé L.

Le fonctionnement est le suivant :

En phase d'acquisition, les deux corrélateurs C1 et C2 fonctionnent de manière classique retardé/avancé en recevant les codes L1 et E1 par l'intermédiaire des commutateurs 586 et 585. De plus les retards introduits par les éléments 582 sont ajustés à une valeur telle que l'espacement entre E1 et L1 soit d'environ un moment de code.

Quand la boucle de verrouillage de retard (DLL) est verrouillée, on commute les commutateurs 585, 586 sur la position représentée sur la figure 3 et l'espacement [incrément de retard de la ligne] est programmée à une fraction de moment (approximativement 0,2 moment de code pour le GPS).

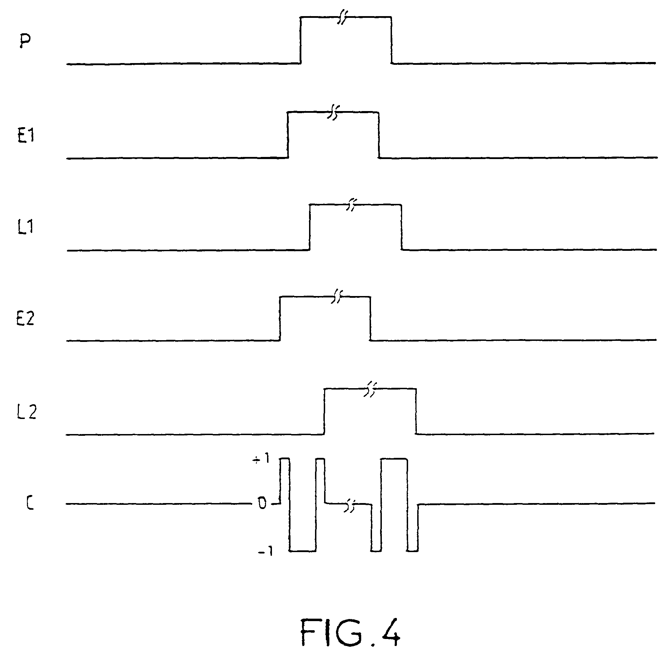

Ceci permet de réduire considérablement l'erreur de position en fonction du retard du multitrajet. Par ailleurs, un autre avantage de la quadruple corrélation selon la relation (1) résulte du fait que la sortie normalisée de la combinaison C a seulement trois états -1, 0 et +1 comme on peut s'en rendre compte à partir des diagrammes de la figure 4. Ceci présente un intérêt certain car la corrélation avec le signal composite reçu ACQ est réalisée très facilement à l'aide de circuits simples à base d'inverseurs et de multiplexeurs sans qu'on ait besoin de multiplieurs.

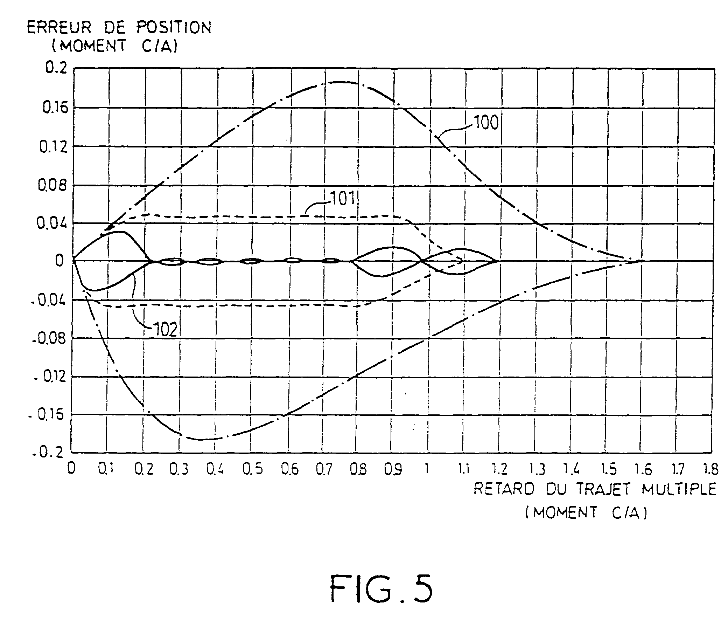

Les performances du système de corrélation selon l'invention peuvent être appréciées à partir des courbes de la figure 5.

La courbe 100 représente l'enveloppe de l'erreur de position pour un espacement d'un moment de code C/A; la courbe 101 représente l'enveloppe de l'erreur de position pour des corrélateurs à espacement réduit à 0,2 moment de code C/A, ceci en fonction du retard du trajet multiple exprimé en moment de code C/A.

Enfin la courbe 102 est relative au système de corrélation selon l'invention avec un espacement de 0,2 moment de code C/A. On peut voir que, pour le système selon l'invention, l'erreur de position est quasiment nulle pour un retard de trajet multiple compris entre 0,2 et 0,8 moment de code C/A. Il est clair que les performances du système selon l'invention (courbe 102) sont meilleures que celles d'un corrélateur amélioré connu à espacement réduit (courbe 101).

Le récepteur décrit ci-dessus peut par exemple être réalisé avec un circuit ASIC pour tous les circuits jusqu'à la sortie des canaux (sortie à 1 kHz). Au-delà, les taches s'effectuent à un rythme bas permettant l'utilisation d'un microprocesseur universel ou d'un DSP.

Bien entendu, les exemples décrits ne sont nullement limitatifs de l'invention.

## Revendications

1. Récepteur à large bande pour la mesure de distance par signaux modulés par des codes pseudo-aléatoires, ledit récepteur démodulant et décodant un signal HF composite incluant plusieurs signaux transmis modulés par des codes pseudo-aléatoires, ledit récepteur comprenant des moyens de changement de fréquence, de filtrage et d'échantillonnage-codage et une pluralité de canaux pour démoduler et décoder chacun un des signaux modulées par des codes pseudo-aléatoires à partir des échantillons fournis par les moyens d'échantillonnage-codage, chaque canal comportant un générateur de code pseudo-aléatoire synchronisé par un signal de contrôle et des moyens de corrélation comprenant au moins deux corrélateurs (C1, C2) recevant lesdits échantillons du signal composite, des moyens de combinaison de codes pseudo-aléatoires avancé et retardé d'un incrément, ajustable, de retard par rapport à un code pseudo-aléatoire dit ponctuel pour fournir un signal de codes pseudo-aléatoires combiné, et des moyens de commutation pour configurer lesdits corrélateurs dans un premier mode d'acquisition comme corrélateurs avancé et retardé, recevant lesdits codes pseudo-aléatoires avancé et retardé, et dans un second mode comme corrélateurs ponctuel et combiné, recevant lesdits codes pseudo-aléatoires ponctuel et combiné de manière que lesdits corrélateurs fournissent des signaux de corrélation permettant de déterminer ledit signal de contrôle, ledit récepteur étant **caractérisé en ce que** lesdits moyens de combinaison (582, 583, 584) comprennent une ligne à retard (582) à cinq prises à retards ajustables régulièrement espacés l'un de l'autre par ledit incrément, recevant ledit code pseudo-aléatoire fourni par le générateur de code pseudo-aléatoire (580) et fournissant dans l'ordre deux signaux de codes pseudo-aléatoires avancés (E2, E1), un signal de codes pseudo-aléatoires ponctuel (P) et deux signaux de codes pseudo-aléatoires retardés (L1, L2), et des circuits (583, 584) de calcul d'une combinaison prédéterminée desdits quatre signaux avancés (E2, E1) et retardés (L1, L2) pour fournir un signal combiné (C) de quadruple corrélation auxdits moyens de commutation (585, 586) pour assurer le fonctionnement des corrélateurs (C1, C2) dans le second mode.

2. Récepteur selon la revendication 1, **caractérisé en ce que** lesdits circuits (583, 584) de calcul sont prévus pour calculer une combinaison arithmétique C telle que :

$$C = E2 - 2E1 + 2L1 - L2$$

où E1 et E2 sont les signaux fournis par la ligne à retard avec des avances respectives d'un et deux incréments par rapport au signal ponctuel P fourni sur la sortie centrale de la ligne à retard et L1 et L2 sont les signaux fournis par la ligne à retard avec des retards respectif d'un et deux incréments par rapport au signal ponctuel P.

3. Récepteur selon la revendication 2, **caractérisé en ce que** ledit incrément de retard est choisi sensiblement égal à un moment du code pseudo-aléatoire dans le premier mode d'acquisition et à une fraction de moment du code pseudo-aléatoire dans le second mode.

## Claims

1. Wideband receiver for the measurement of distance by signals modulated by pseudo-random codes, the said receiver demodulating and decoding a composite HF signal including several transmitted signals modulated by pseudo-random codes, the said receiver comprising frequency-changing, filtering and sampling-encoding means and a plurality of channels, each designed to demodulate and decode one of the signals modulated by pseudo-random codes on the basis of the samples given by the sampling-encoding means, each channel comprising a pseudo-random code generator synchronized by a control signal and correlation means comprising at least two correlators (C1, C2), receiving the said samples of the composite signal, means for combining pseudo-random codes early and late with an adjustable delay increment with respect to a so-called punctual pseudo-random code so as to give a combined signal of pseudo-random codes, and switching means for configuring the said correlators in a first acquisition mode as early and late correlators, receiving the said early and late pseudo-random codes, and in a second mode as punctual and combined correlators, receiving the said punctual and combined pseudo-random codes in such a way that the said correlators give correlation signals making it possible to determine the said control signal, the said receiver being **characterized in that** the said combination means (582, 583, 584) comprise a delay line (582) having five adjustable delay taps regularly spaced apart by the said increment, receiving the said pseudo-random code given by the pseudo-random code generator (580) and giving in order two early pseudo-random code signals (E2, E1), a punctual pseudo-random code signal (P) and two late pseudo-random code signals (L1, L2), and circuits (583, 584) for calculating a predetermined combination of the said four early (E2, E1) and late (L1, L2) signals so as to give a combined signal (C) of quadruple correlation to the said switching means (585, 586) so as to ensure the operation of the correlators (C1, C2) in the second mode.

2.  Receiver according to Claim 1, **characterized in that** the said calculation circuits (583, 584) are provided so as to calculate an arithmetic combination C such that:

$$C = E2 - 2E1 + 2L1 - L2$$

where E1 and E2 are the signals given by the delay line with respective advances of one and two increments with respect to the punctual signal P given on the central output of the delay line and L1 and L2 are the signals given by the delay line with respective delays of one and two increments with respect to the punctual signal P.

3.  Receiver according to Claim 2, **characterized in that** the said delay increment is chosen so as to be substantially equal to one pseudo-random code chip in the first mode of acquisition and to a fraction of a pseudo-random code chip in the second mode.

**Patentansprüche**

1.  Breitbandempfänger zur Entfernungsmessung mittels Signalen, die durch Pseudo-Zufallskodes moduliert sind, wobei der Empfänger ein mehrere von Pseudo-Zufallskodes modulierte Signale enthaltendes gemischtes Hochfrequenzsignal demoduliert und dekodiert und Mittel zur Frequenzumsetzung, zur Filterung, zur Tastung und Kodierung sowie eine Mehrzahl von Kanälen zur Demodulierung und Dekodierung je eines der von Pseudo-Zufallskodes modulierten Signale ausgehend von durch die Tast- und Kodiermittel gelieferten Tastproben besitzt, wobei jeder Kanal einen Pseudo-Zufallskodegenerator, der von einem Steuersignal synchronisiert wird, sowie Korrelationsmittel, die mindestens zwei Korrelatoren (C1, C2) aufweisen, welche die Tastproben des gemischten Signals empfangen, Mittel zur Kombination von um ein justierbares Verzögerungselement bezüglich eines sogenannten pünktlichen Pseudo-Zufallskodes voreilenden und nacheilenden Pseudo-Zufallskodes zur Lieferung eines kombinierten Signals von Pseudo-Zufallskodes, sowie Schaltmittel enthält, die die Korrelatoren in einem ersten Modus, dem Erfassungsmodus, in Form eines voreilenden und eines nacheilenden Korrelators, die die voreilenden und nacheilenden Pseudo-Zufallskodes empfangen, sowie in einem zweiten Modus in Form eines pünktlichen und eines kombiniertenr Korrelators konfigurieren, die den pünktlichen und den kombinierten Pseudo-Zufallskode empfangen, sodaß die Korrelatoren Korrelationssignale liefern, die das Steuersignal zu bestimmen erlauben, **dadurch gekennzeichnet, daß** die Mittel zur Kombination von Pseudo-Zufallskodes (582, 583, 584) eine Verzögerungsleitung (582) mit fünf Abgriffen besitzen, die justierbar sind und gegenseitige Abstände gemäß dem Inkrement besitzen sowie den vom Pseudo-Zufallskodegenerator (580) gelieferten Pseudo-Zufallskode empfangen und in der Reihenfolge zwei voreilende Pseudo-Zufallskodesignale (E2, E1), ein pünktliches Pseudo-Zufallskodesignal (P) und zwei nacheilende Pseudo-Zufallskodesignale (L1, L2) liefern, wobei weiter Schaltungen (583, 584) zur Berechnung einer vorbestimmten Kombination der vier vor- und nacheilenden Signale (E2, E1; L1, L2) vorgesehen sind, um ein kombiniertes Signal (C) einer Vierfachkorrelation an die Schaltmittel (585, 586) zu liefern, das den Betrieb der Korrelatoren (C1, C2) nach dem zweiten Modus zu gewährleistet.

2.  Empfänger nach Anspruch 1, **dadurch gekennzeichnet, daß** die Schaltungen (583, 584) zur Berechnung einer arithmetischen Kombination C folgende Beziehung realisieren:

$$C = E2 - 2 \cdot E1 + 2 \cdot L1 - L2$$

wobei E1 und E2 die von der Verzögerungsleitung mit einer Voreilung von einem beziehungsweise zwei Inkrementen bezüglich des am zentralen Ausgang der Verzögerungsleitung gelieferten pünktlichen Signals P und L1 und L2 die von der Verzögerungsleitung mit einer Nacheilung von einem beziehungsweise zwei Inkrementen bezüglich des pünktlichen Signals P sind.

3.  Empfänger nach Anspruch 2, **dadurch gekennzeichnet, daß** das Verzögerungsinkrement im ersten, dem Erfassungsmodus im wesentlichen einem Moment des Pseudo-Zufallskodes und im zweiten Modus einem Bruchteil eines Moments des Pseudo-Zufallskodes gleicht.

FIG.1

EP 0 767 388 B1

FIG.2

FIG. 3

FIG.4

FIG.5